Europäisches Patentamt

European Patent Office

Office européen des brevets

(11) Veröffentlichungsnummer: **0 308 578**
**A2**

## (12) EUROPÄISCHE PATENTANMELDUNG

(21) Anmeldenummer: 88106468.7

(51) Int. Cl.4: **C03C 17/36**

(22) Anmeldetag: 22.04.88

(30) Priorität: 26.08.87 DE 3728478

(43) Veröffentlichungstag der Anmeldung:
29.03.89 Patentblatt 89/13

(84) Benannte Vertragsstaaten:
AT BE CH DE ES FR GB IT LI LU NL SE

(71) Anmelder: LEYBOLD AKTIENGESELLSCHAFT
Wilhelm-Rohn-Strasse 25
D-6450 Hanau 1(DE)

(72) Erfinder: Szczyrbowski, Joachim, Dr.
Ringofenstrasse 5
D-8758 Goldbach(DE)
Erfinder: Dietrich, Anton Dr.
Heilbrunn 16
D-8441 Wiesenfelden(DE)
Erfinder: Hartig, Klaus, Dr.
Hanauer Strasse 17
D-6451 Ronneburg 2(DE)
Erfinder: Kastner, Albert
Eichenheege 10
D-6457 Maintal(DE)

(54) Verfahren zum Herstellen von Scheiben mit hohem Transmissionsverhalten im sichtbaren Spektralbereich und mit hohem Reflexionsverhalten für Wärmestrahlung sowie durch das Verfahren hergestellte Scheiben.

(57) Bei einem Verfahren zum Herstellen von Scheiben, insbesondere Windschutzscheiben mit hohem Transmissions- und Reflexionsverhalten ist eine erste Schicht (1) aus einem Oxid, eine zweite Schicht (2) aus einem Metall, eine dritte Schicht (3) aus Silber oder einer Silberlegierung, eine vierte Schicht (4) aus einem Metall der die zweite Schicht bildenden Art und eine letzte Schicht (6) aus einem Oxid aus der die erste Gruppe bildenden Art auf die Mineralglasscheibe (S) aufgebracht, wobei eine zwischen der vierten und letzten Schicht (4 und 6) eingefügte zusätzliche Schicht (5) aus einem transparenten Oxid, die bevorzugt aus Titanoxid gebildet ist, vorgesehen ist. Die derart beschichtete Mineralglasscheibe (S) kann mit diesem aus sechs Schichten gebildeten Schichtpaket (1 bis 6) auf mindestens die Erweichungstemperatur des Glases erwärmt, in erwärmtem Zustand in der gewünschten Weise verformt und im verformten Zustand abgekühlt werden.

FIG.1

# Verfahren zum Herstellen von Scheiben mit hohem Transmissionsverhalten im sichtbaren Spektralbereich und mit hohem Reflexionsverhalten für Wärmestrahlung sowie durch das Verfahren hergestellte Scheiben

Die Erfindung betrifft ein Verfahren zum Herstellen von Scheiben mit hohem Transmissionsverhalten im sichtbaren Spektralbereich und mit hohem Reflexionsverhalten für Wärmestrahlung nach dem Oberbegriff des Patentanspruchs 1 sowie eine Scheibe nach dem Oberbegriff des Patentanspruchs 8.

Derartige Scheiben sollen einen möglichst großen Anteil des sichtbaren Lichts durchlassen und einen möglichst großen Anteil der Sonnenstrahlung zurückhalten. Diese Maßnahme soll im Sommer verhindern, daß die unerwünschte Wärmestrahlung des Sonnenlichts in Räume eindringt. Besonders bei Kraftfahrzeugen ist dieser Effekt wegen der schräggestellten und dadurch sehr großen Front- und Heckscheiben besonders unerwünscht.

Durch die DE-OS 33 07 661 und die EP-OS 104 870 ist es bekannt, eine Silberschicht und eine unmittelbar auf das Silber aufgebrachte sehr dünne Metallschicht zwischen zwei Oxidschichten einzuschließen, wobei die dünne Metallschicht die Silberschicht gegen einen chemisch-thermischen Angriff beim Herstellen der obersten Oxidschicht schützt. Setzt man ein derartiges Schichtsystem jedoch Temperaturen oberhalb 150 °C aus, so erfolgt eine Diffusion des Silbers in die angrenzende Oxid- und oder Metallschicht, wobei ein starker Anstieg des Flächenwiderstandes und eine entsprechende Verringerung der Transmissionswerte des Schichtsystems zu beobachten ist, d.h. zwei der wesentlichen Eigenschaften des Schichtsystems werden verschlechtert.

Gemäß einem Verfahren nach einer älteren Patentanmeldung (P 35 43 178.4) wird deshalb empfohlen, auf Substrate aus Mineralglas mittels eines Vakuumbeschichtungsverfahrens ein Mehrschichtsystem aufzubringen, wodurch dem Glas ein hohes Reflexionsverhalten für Wärmestrahlung bei gleichzeitig hohem Transmissionsverhalten für sichtbares Licht verliehen wird. Dabei ermöglicht das aufgebrachte Schichtsystem die zunächst flache beschichtete Glasscheibe einem Biegeprozeß zu unterziehen, bei dem die Erweichungstemperatur des Glases von ca. 650 °C erreicht wird, ohne die Eigenschaften der beschichteten Glasscheibe im negativen Sinne zu verändern. Die so behandelte Glasscheibe weist infolge der Beschichtung einen niedrigen elektrischen Widerstand auf, so daß durch Anlegen einer elektrischen Spannung die Glasscheibe beheizt werden kann.

Werden derartige Scheiben mit einer weiteren unbeschichteten Scheibe zu Verbundscheiben in Sandwich-Bauweise verarbeitet, eignen sie sich insbesondere für den Einsatz in Kraftfahrzeugen als heizbare Front- oder Heckscheibe mit zusätzlicher Schutzfunktion gegen intensive Sonneneinstrahlung. Bei Verbundglasscheiben (VSG-Scheiben) dieser Art befindet sich - ohne Lufteinschluß - zwischen den zwei dünnen Scheiben aus Mineralglas eine zäh-elastische Zwischenlage aus einem Kunststoff (z.B. Polyvinylbutyrat). Bei einer so beschichteten Scheibe steht die beschichtete Seite in direktem Kontakt mit dem Kunststoff. Für den Einsatz derartiger Verbundscheiben in Kraftfahrzeugen ist es aber notwendig, daß die Scheiben bestimmte Mindestwerte für die Transmission des sichtbaren Lichtes erreichen müssen, wobei bestimmte Reflexionswerte für sichtbares Licht nicht überschritten werden dürfen. Dies soll sicherstellen, daß auch bei schlechten Lichtverhältnissen eine ausreichende Sicht durch die Scheibe gewährleistet ist sowie spiegelnde Reflexe in der Scheibe nicht zu einer Sichtbehinderung des Fahrers und zu einer Blendung der entgegenkommenden Fahrzeuge führt. Als zulässiger Grenzwert für die Lichttransmission und -reflexion wird im allgemeinen eine Lichttransmission von 80 ± 5 % gefordert.

Werden nach dem Verfahren gemäß der älteren Patentanmeldung (P 35 43 178.4) beschichtete Scheiben zu Verbundglasscheiben verarbeitet, so lassen sich im allgemeinen die in der europäischen Norm geforderten Werte für die Lichttransmission und -reflexion erreichen. Insbesondere werden typischerweise Lichttransmissions-werte von ca. 77 % und - reflexionswerte von 13 bis 14 % erreicht. Die erreichten Transmissionswerte sind dabei für eine Produktion gerade noch ausreichend, da mit Produktionstoleranzen von mindestens ca. + 1 % gerechnet werden muß, was dann immer noch innerhalb der geforderten Grenzen liegt. Die Reflexionswerte sind zwar auch innerhalb der geforderte Grenze, jedoch deutlich höher als z. B. bei unbeschichteten Scheiben oder Wärmeschutzverglasungen, die mit massegefärbtem Glas realisiert werden. Bei derartigen Scheiben liegen die Lichtreflexionswerte bei ca. 8 %, d.h. deutlich niedriger als im Fall der beschichteten Scheiben. Dies führt dazu, daß Teile von Armaturen oder abgelegten Artikeln, die nicht mattschwarz gefärbt sind, in Kraftfahrzeugen sichtbare und störende Reflexe in der Scheibe erzeugen können.

Diese hohen Lichtreflexionswerte sind nun nicht charakteristisch für die beschichteten Scheiben, da die beschichteten, gebogenen Einzelscheiben Reflexionswerte von nur 6 bis 10 % und Lichttransmissionswerte von bis zu 83 % aufweisen. Erst durch das Zusammenfügen dieser beschichteten Scheiben mit einer weiteren unbeschichteten Scheibe mittels einer Laminatfolie ergibt sich ein deutlicher Verlust an Lichttransmission und eine Erhöhung der Reflexion auf Werte um 14 %. Dies kann nach der Theorie der Lichtbrechung dadurch erklärt werden, daß die Kunststoffolie, die bei der VSG-Scheibenherstellung in direkten Kontakt mit der Schicht gebracht wird, eine Brechzahl von ca. 1,55 aufweist, die deutlich höher ist als die Brechzahl 1 von Luft, die bei der beschichteten Einzelscheibe in direktem Kontakt mit der beschichteten Seite steht. Durch den Unterschied in der Brechzahl des angrenzenden Mediums kommt es nun zu Reflexionsverlusten an dieser Grenzfläche und damit zu einer unterschiedlichen Lichttransmission und Reflexion für die VSG-Scheibe im Vergleich zur beschichteten Einzelscheibe. Zu erwähnen ist, daß die Laminatfolie in ihrer Brechzahl so gewählt wurde, daß sie sehr gut mit der Brechzahl von Floatglas von ca. 1,52 übereinstimmt. Dies bedeutet, daß beim Zusammenfügen von unbeschichteten Glasscheiben zu VSG-Scheiben keine merklichen Reflexionsverluste auftreten, wodurch solche Scheiben annähernd die gleichen Werte für Lichttransmission und -reflexion aufweisen wie normales Floatglas gleicher Gesamtdicke. Um die auftretenden Verluste zu vermeiden, wäre zunächst eine bessere Anpassung der Brechzahl der Laminatfolie an die beschichtete Scheibe denkbar. Die an der der Folie zugewandten Oxidschichten des in der älteren Patentanmeldung (P 35 43 178.4) angegebenen Schichtpaketes zeigen im allgemeinen eine Brechzahl von ca. 2,0. Da jedoch an der anderen Grenzfläche der Folie weiterhin unbeschichtetes Glas eingesetzt wird, würde eine Änderung der Folienbrechzahl zu Reflexionsverlusten an dieser Grenzfläche führen, so daß eine Änderung der Folienbrechzahl nicht zu dem gewünschten Ergebnis führen wird.

Es gehört jedoch zum Stande der Technik, daß mit Hilfe dünner dielektrischer Schichten geeigneter Brechzahl und Dicke das Reflexionsvermögen von Oberflächen stark modifiziert werden kann. Dies wird z. B. bei Entspiegelung von Brillen und Linsen für optische Geräte etc. häufig angewandt. Eine Lösung dieser Art ist für das vorliegende Problem naheliegend, da bereits dünne Schichten aufgebracht werden.

Der Erfindung liegt demnach die Aufgabe zugrunde, ein Schichtsystem anzugeben, das die erwähnten Reflexionsverluste bei der VSG-Herstellung mit beschichteten Scheiben vermeidet oder vermindert, wobei die sonstigen Eigenschaften der Beschichtung, wie sie in der älteren Patentanmeldung beschrieben sind, wie hohe Lichttransmission im sichtbaren Spektralbereich, geringe Sonnenenergietransmission sowie niedriger elektrischer Widerstand und die zum Biegen der beschichteten Scheiben notwendige Temperaturbeständigkeit erhalten bleiben sollen.

Diese Aufgabe wird erfindungsgemäß gelöst durch eine zusätzliche zwischen der vierten und der letzten Schicht eingefügte Schicht aus einem transparenten Oxid mit einer Brechzahl, die größer ist als die Brechzahl der ersten Schicht - vorzugsweise - 2,3 - und die bevorzugt aus Titandioxid gebildet ist, wobei das Substrat mit dem gesamten aus sechs Schichten bestehenden Schichtpaket auf mindestens die Erweichungstemperatur des Glases erwärmt, in erwärmtem Zustand plastisch verformt und im verformten Zustand abgekühlt wird.

Vorzugsweise wird für die erste Schicht eine Dicke von ca. 30 bis 45 nm gewählt und für die Schichten zwei und vier eine Dicke, die zu einer größeren Absorption im sichtbaren Bereich führt, als dies dem Endzustand entspricht, wobei die Temperaturbehandlung in oxidierender Atmosphäre durchgeführt wird, bis die mittlere Transmission im sichtbaren Bereich gegenüber derjenigen vor der Temperaturbehandlung um mindestens 5 % - vorzugsweise um mindestens 8 % - zugenommen hat.

Zweckmäßigerweise stellt man die Dicke der dritten Schicht (Silber) so ein, daß der gewünschte Flächenwiderstand zwischen 10 und 2 Ohm/ $\square$ beträgt, was für reines Silber einer Schichtdicke von ca. 8 bis 15 nm entspricht.

Mit Vorteil werden die zweite und die vierte Schicht bei der Beschichtung so eingestellt, daß sie eine meßbare Absorption im sichtbaren Bereich des Lichts verursachen, die jedoch durch eine nachfolgende Temperaturbehandlung in sauerstoffhaltiger Atmosphäre infolge der Umwandlung dieser Schichten zu einem Oxid mit geringer Absorption kompensiert wird.

Bei einem bevorzugten Verfahren weist die fünfte Schicht aus mindestens einer der genannten Oxide eine Brechzahl von mindestens 2,3 auf, wobei sie in einer Dicke von 10 bis 12 nm aufgebracht wird.

Als nächstes folgt eine dritte Schicht 3 aus Silber oder einer Silberlegierung mit mindestens 50 Gewichtsprozent Silberanteil, und hierauf wiederum eine vierte Schicht 4 aus einem Metall aus der Gruppe Tantal, Wolfram, Nickel, Eisen oder Legierungen mit mindestens 50 Gewichtsprozent Anteil eines dieser Metalle, eine vorletzte Schicht 5 aus einem transparenten Oxid mit einer Brechzahl, die größer ist als die Brechzahl der ersten Schicht und aus Titanoxid besteht und eine sechste Schicht 6, die wie die erste Schicht wiederum aus einem Oxid aus der Gruppe Zinnoxid, Siliziumdioxid, Aluminiumoxid, Tantaloxid, Zirkonoxid oder deren Mischoxide besteht. Das Substrat mit dem Schichtpaket 1 bis 6 wird auf mindestens die Erweichungstemperatur des Glases erwärmt und dann in erwärmtem Zustand verformt.

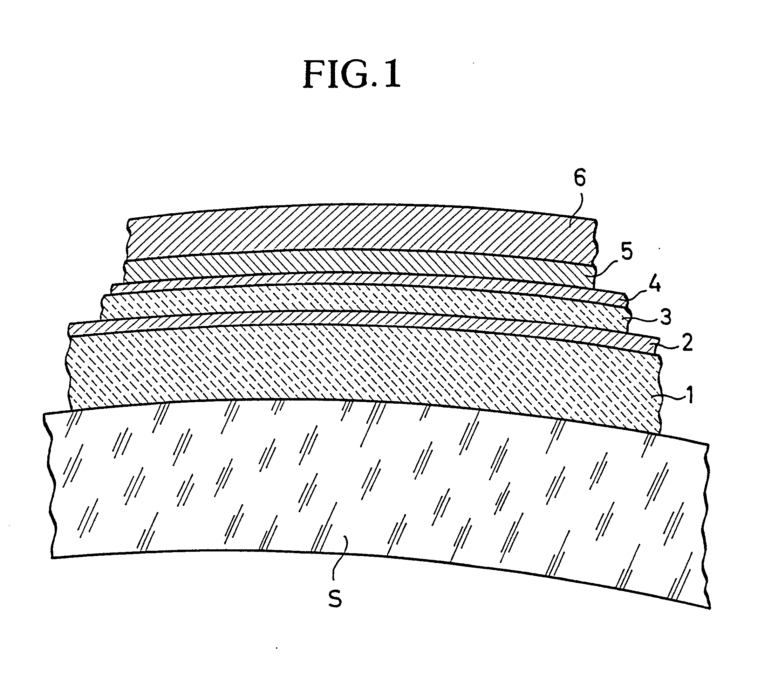

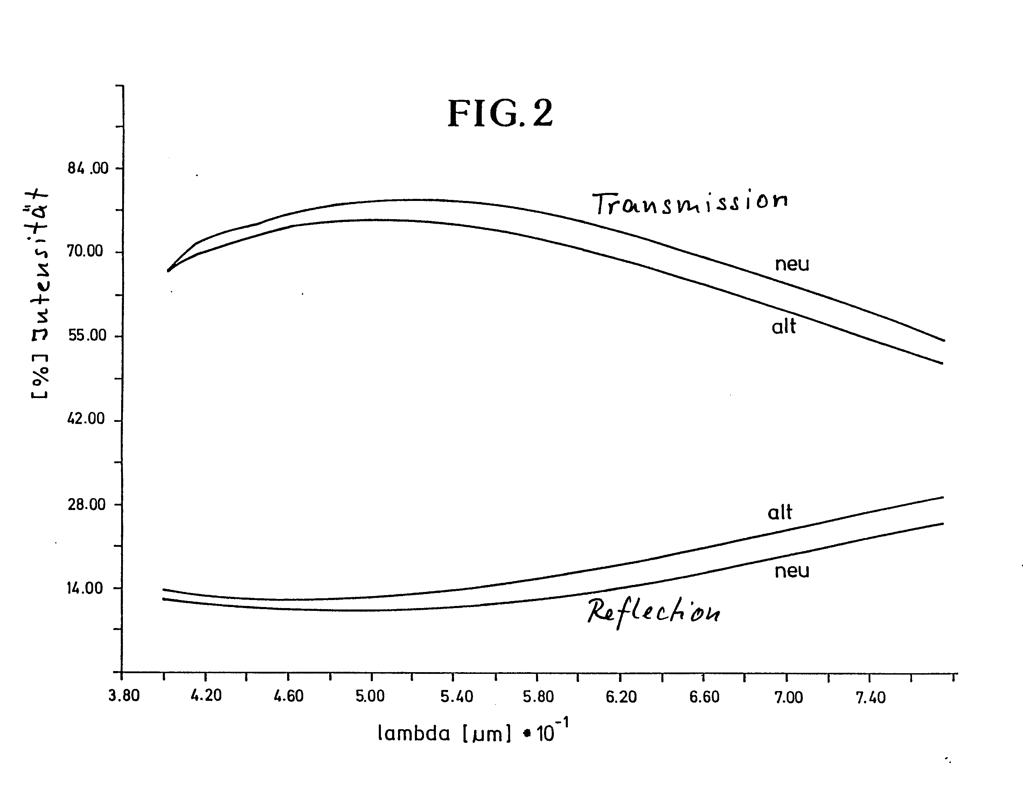

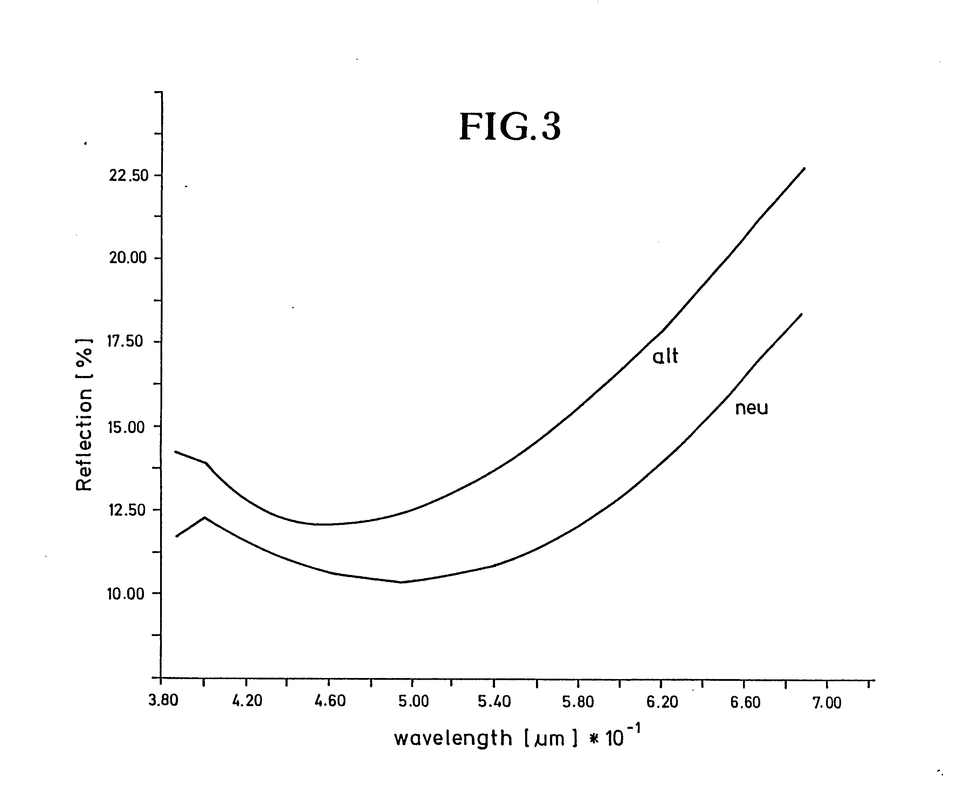

## Ansprüche

1. Verfahren zum Herstellen von Scheiben mit hohem Transmissionsverhalten im sichtbaren Spektralbereich und mit hohem Reflexionsverhalten für Wärmestrahlung durch Beschichtung von aus Mineralglas bestehenden Substraten mit

a) einer ersten Schicht (1) aus einem Oxid aus der Gruppe Zinnoxid, Siliziumdioxid, Aluminiumoxid, Tantaloxid und Zirkonoxid oder deren Mischoxide, mit

b) einer zweiten Schicht (2) aus einem Metall aus der Gruppe Tantal, Wolfram, Nickel und Eisen oder Legierungen mit mindestens 50 Gewichtsprozent Anteil eines dieser Metalle, mit

c) einer dritten Schicht (3) aus Silber oder einer Silberlegierung mit mindestens 50 Gewichtsprozent Silberanteil, mit

d) einer vierten Schicht (4) aus einem Metall aus der die zweite Schicht bildenden Gruppe und mit

e) einer letzten Schicht (6) aus einem Oxid aus der die erste Gruppe bildenden Oxide, gekennzeichnet durch eine zwischen der vierten und letzten Schicht (4 und 6) eingefügte zusätzliche Schicht (5) aus einem transparenten Oxid mit einer Brechzahl, die größer ist als die Brechzahl der ersten Schicht (vorzugsweise - 2,3) und die bevorzugt aus Titanoxid gebildet ist, wobei das Substrat mit dem aus sechs Schichten gebildeten Schichtpaket (1 bis 6) auf mindestens die Erweichungstemperatur des Glases erwärmt, in erwärmtem Zustand plastisch verformt und im verformten Zustand abgekühlt wird.

2. Verfahren nach Anspruch 1, dadurch gekennzeichnet, daß man

a) für die erste Schicht (1) eine Dicke von ca. 30 bis 45 nm wählt und

b) die Schichten (2 und 4) in einer Dicke aufbringt, die zu einer größeren Absorption im sichtbaren Bereich führt, als dies dem Endzustand entspricht, und

c) die Temperaturbehandlung in oxidierender Atmosphäre durchführt, bis die mittlere Transmission im sichtbaren Bereich gegenüber derjenigen vor der Temperaturbehandlung um mindestens 5 %, vorzugsweise um mindestens 8 %, zugenommen hat.

3. Verfahren nach Anspruch 1, dadurch gekennzeichnet, daß man die Dicke der Silberschicht (3) so einstellt, daß der gewünschte Flächenwiderstand zwischen 10 und 2 Ohm ☐ beträgt, was für reines Silber einer Schichtdicke von ca. 8 bis 15 nm entspricht.

4. Verfahren nach Anspruch 1, dadurch gekennzeichnet, daß die Schichten zwei und vier bei der Beschichtung so eingestellt werden, daß sie eine meßbare Absorption im sichtbaren Bereich des Lichts verursachen, die jedoch durch eine nachfolgende Temperaturbehandlung in sauerstoffhaltiger Atmosphäre infolge der Umwandlung dieser Schichten zu einem Oxid mit geringer Absorption kompensiert wird.

5. Verfahren nach Anspruch 1, dadurch gekennzeichnet, daß die fünfte Schicht aus mindestens einem der genannten Oxide eine Brechzahl von mindestens 2,3 aufweist und in einer Dicke von 10 bis 12 nm aufgebracht wird.

6. Verfahren nach Anspruch 1, dadurch gekennzeichnet, daß als sechste Schicht eine Oxidschicht mit einer Brechzahl von 2,0 und einer Dicke von 20 bis 30 nm aufgebracht wird, wobei die Dicken der Schichten (5 und 6) so gewählt werden, daß der optische Wegdurch diese beiden Schichten dem optischen Weg durch die erste Schicht entspricht.

7. Verfahren nach Anspruch 1, dadurch gekennzeichnet, daß man die erste und die letzten beiden Schichten (5 und 6) durch Kathodenzerstäubung von Targets aus den metallischen Oxidbildern in reaktiver Atmosphäre ($O_2$ und Edelgas) erzeugt und die zweite, dritte und vierte Schicht durch Kathodenzerstäubung von Targets aus den genannten Metallen bzw. -legierungen in neutraler Atmosphäre (Edelgas).

8. Scheibe mit hohem Transmissionsverhalten im sichtbaren Spektralbereich und mit hohem Reflexionsverhalten für Wärmestrahlung mit einem aus Mineralglas bestehenden Substrat mit einer ersten Schicht aus einem Oxid aus der Gruppe Zinnoxid, Siliziumdioxid, Aluminiumoxid, Tantaloxid und Zirkonoxid oder deren Mischoxide, mit einer zweiten Schicht aus einem mindestens teilweise oxidierten Metall aus der Gruppe Tantal, Wolfram, Nickel und Eisen oder Legierungen mit mindestens 50 Gewichtsprozent Anteil eines dieser Metalle, mit einer dritten Schicht aus Silber oder einer Silberlegierung mit mindestens 50 Gewichtsprozent Silberanteil, mit einer vierten Schicht aus einem mindestens teilweise oxidierten Metall aus der die zweite Schicht bildenden Gruppe und mit einer fünften Schicht aus einem transparenten Oxid mit einer Brechzahl, die größer ist als die Brechzahl der ersten Schicht, - vorzugsweise - 2,3 - und die bevorzugt aus Titandioxid gebildet ist, und einer sechsten Schicht aus einem Oxid aus der die erste Gruppe bildende Oxide, dadurch gekennzeichnet, daß die Scheibe gebogen ist.

# FIG.1

FIG.2

# FIG.3

EP 0 308 578 A2